# EUROPEAN PATENT APPLICATION

(11) **EP 0 860 828 A2**
(43) Date of publication of application: **26.08.1998**
(21) Application number: 98301318.6
(22) Date of filing: 24.02.1998
(51) Int. Cl.: G11B 27/031, G11B 27/32, G11B 27/10, G11B 20/10, G11B 20/12, G11C 7/00

(54) **Recording and reproducing information**

(30) Priority: 25.02.1997 JP 40905/97
(71) Applicant: SONY CORPORATION, Tokyo 141 (JP)
(72) Inventor: Haneda, Naoya, Shinagawa-ku, Tokyo 141 (JP)
(74) Representative: Turner, James Arthur

(57) **Abstract**

The inventicn provides an information recording and reproducing apparatus provided with a recording medium composed of plural recording medium pieces. The apparatus provides a capability of more efficiently and flexibly managing a memory without having to lower a reading speed and a writing one. The information recording and reproducing apparatus includes a recording medium 103 composed of plural recording medium pieces where information is to be written, a file managing circuit 104 for managing a storage area of the recording medium as a one-dimensional sequence (block sequence) of blocks regularly and circularly located on the recording medium pieces in the vertical direction, and a recording medium control circuit 102 for controlling the recording medium 103 based on the file management circuit 104. The recording medium control circuit 102 enables to write a file composed of a block sequence (file block sequence) of any length at any head address on the recording medium 103 and record the file management information in the'file management circuit 104.

## Description

The present invention relates to recording and reproducing information.

It has been proposed in Japanese Laid-open No. Hei 6-131371, Japanese Laid-open No. Hei 6-215010 and Japanese Laid-open No. Hei 6-301601 an information feeding apparatus (information transfer apparatus) for transferring information such as speech, pictures, text, programs to a recording apparatus or a recording and reproducing apparatus having a semiconductor memory built therein, for the purpose of feeding various kinds of information.

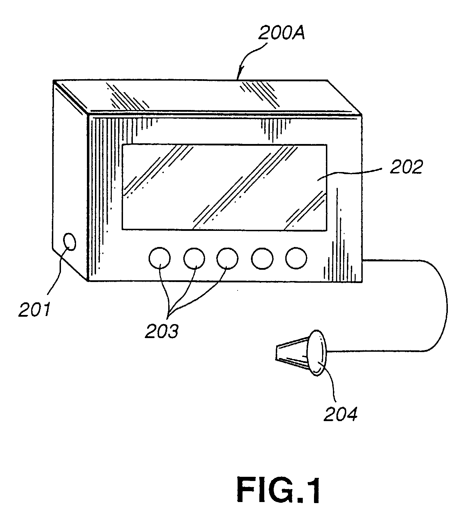

Fig. 1 of the accompanying drawings illustrates an outer appearance of apparatus for recording and reproducing information as proposed in the foregoing publications. The information recording and reproducing apparatus 200A provides a coupling terminal 201 to be coupled with an information feeding apparatus (not shown), through which information is allowed to be copied from the information feeding apparatus to a recording medium (not shown) provided inside of the information recording and reproducing apparatus 200A. This apparatus does not specify a type of the recording medium. For this purpose, it is convenient to use a semiconductor memory that provides capabilities such as fast copy, easy random access and excellent portability.

This information recording and reproducing apparatus 200A includes a display panel 202 for displaying text and pictures and a function selector 203 composed of push buttons. This information recording and reproducing apparatus 200A is arranged so that the information recorded in the recording medium may be displayed on the display panel 202. Hence, the user can select any desired information with the function selector 203 and reproduce the selected information.

The content of the information fed by the information feeding apparatus contains text information, speech information, picture information, and computer programs but is not specifically limited. The reproduction of the program indicates execution of the program. In this case, during the execution, the user may enter information as required. If the reproduction signal is text information or a video signal, it may be displayed on the display panel 202 composed of a liquid crystal display panel. Further, if it is speech information, it may be outputted to an earphone 204. Though not shown, in place of the earphone 204, a speaker may be equipped therewith. In addition, an output terminal for the reproduction signal maybe provided so that the apparatus may be connected to an external display or a speaker therethrough.

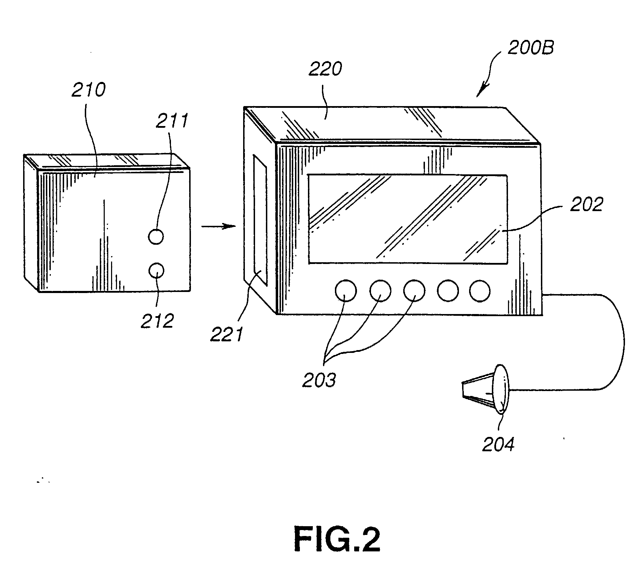

Fig.2 illustrates an outer appearance of another apparatus for recording and reproducing information proposed in the foregoing publications. The information recording and reproducing apparatus 200B shown in Fig.2 is arranged by separating the information recording and reproducing apparatus 200A shown in Fig.1 into the information recording apparatus 210 and the information reproducing information 220. This information recording and reproducing apparatus 200B is arranged so that an information recording apparatus 210 is inserted into an insertion port 221 of an information reproducing apparatus 220. In this arrangement, the information may be transmitted from the information recording apparatus 210 to the information reproducing apparatus 220 so that the information may be reproduced therein.

For reproducing the information, it is necessary to transfer data and control signals between the information recording apparatus 210 and the information reproducing apparatus 220. Hence, the information recording apparatus 210 provides a coupling terminal 212 to be coupled with the information reproducing apparatus 220. Further, the information reproducing apparatus provides the corresponding coupling terminal (not shown) to the terminal 212. When the information recording apparatus 210 is mounted with the information reproducing apparatus 220, both of the coupling terminals are coupled with each other.

The information recording apparatus 210 provides two coupling terminals, the coupling terminal 211 to be coupled with the information feeding apparatus and the coupling terminal 212 to be coupled with the information reproducing apparatus. In place, the apparatus 210 may provide a single coupling terminal to be switched for each purpose.

The information recording apparatus 210 may be composed of only the recording medium. If it is composed of only the recording medium, the resulting information recording apparatus 210 is small and lightweight. In this case, the control of reading or writing the information from or to the recording medium is executed on the information reproducing apparatus 220 or the information feeding apparatus side.

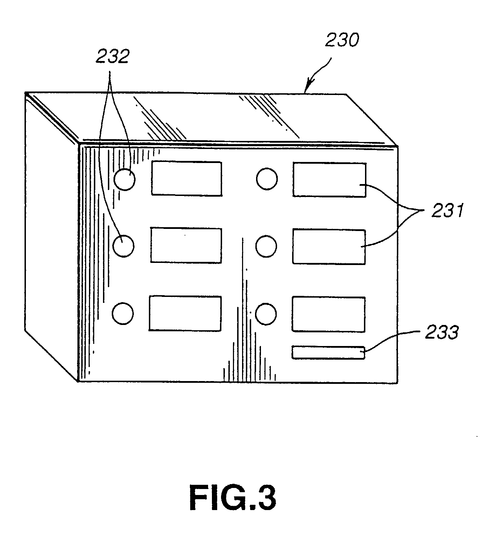

Fig.3 illustrates an outer appearance of the information feeding apparatus proposed in the foregoingpublication. This information feeding apparatus 230 provides display units 231 for indicating the content and the price ofinformation to be fed, for example, and output selectors 232 for selecting information desired by the user. For copying the information, the user connects the information recording apparatus 210 shown in Fig.2 into an insertion port 233 of the information feeding apparatus 230. Further, for this purpose, the coupling terminal (not shown) provided in the information feeding apparatus 230 may be connected to the coupling terminal 201 of the information recording and reproducing apparatus 200A shown in Fig.1.

The information feeding apparatus 230 provides a recording medium for saving information to be fed and an information copy control unit (not shown) for reading information desired by the user from the recording medium and writing the read information into the information recording apparatus 210 and the information recording and reproducing apparatus 200A. The information feeding apparatus 230 is connected to an information feeding center (not shown) by wired or wireless communicating means. The user may request his or her desired information through the communicating means. In this arrangement, the recording medium is not required to provide in the information feeding apparatus 230. If the recording medium is provided inside of the information feeding apparatus 230, by updating the information saved in the recording medium, the information feeding apparatus 230 may feed the latest information though it can suppress the communication cost.

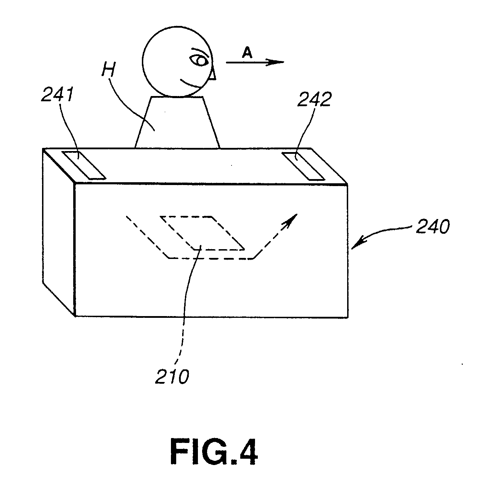

Fig.4 illustrates an outer appearance of another information feeding apparatus 240 proposed in the foregoing publication. This information feeding apparatus 240 provides an insertion port 241 and an ejection port 242 used for the information recording apparatus 210, both of which ports and outlet are separated by a certain distance. This information feeding apparatus 240 provides moving means (not shown) for conveying the information recording apparatus 210 inserted from the insertion port 241. The information to be fed is copied in the inserted information recording apparatus 210. Then, the information recording apparatus 210 is ejected from the ejection port 242. A person H who wants to obtain information can obtain a copy of information as he or she is walking in the direction of an arrow A in Fig.4. This information feeding apparatus 240 thus provides a capability of swiftly feeding information to many persons.

Further, it has been proposed in Japanese Patent Application No. Hei 8-228966 means for managing a file in the case of using a recording medium whose erasing unit (referred to as a block) is larger than a writing unit (referred to as a page). This file managing means is a system of recording all files containing divided files from a head address of a block or if a recording medium is composed of plural recording medium pieces, regularly and vertically recording all files from the logically head medium piece.

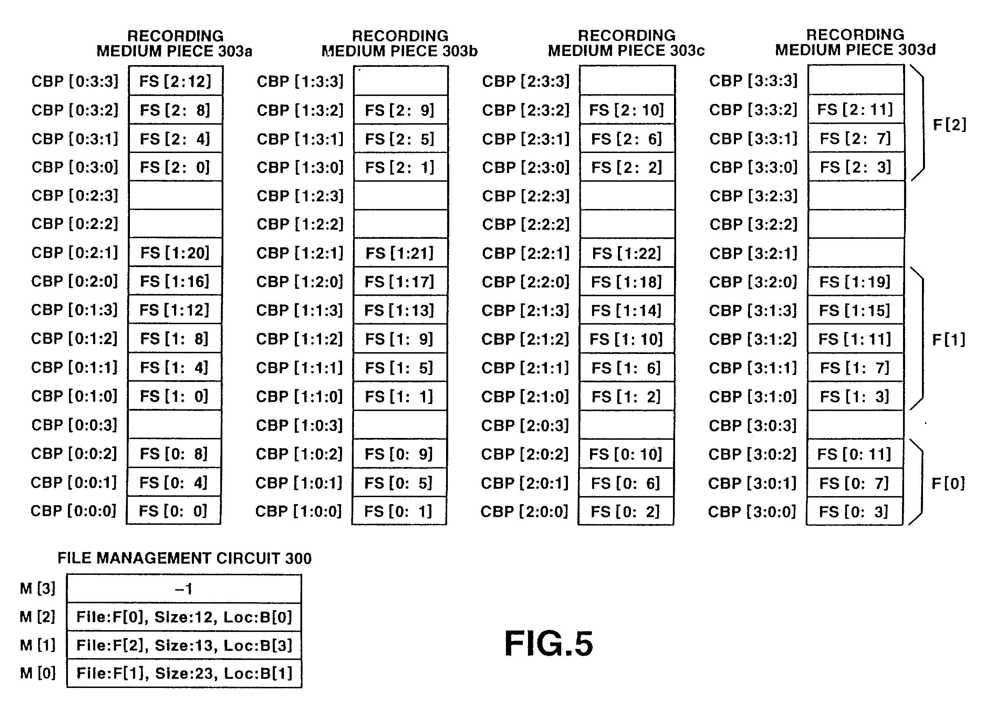

Fig.5 illustrates the state of recording files if the recording medium is composed of plural recording medium pieces and the file managing means 300. Herein, the description will be expanded with an example of the recording medium 303 composed of four recording medium pieces 303a, 303b, 303c and 303d in which one block is composed of four pages. The block denotes an erasing unit of data. The page denotes a writing unit of data.

Herein, as means of displaying a physical address of the recording medium 303, three units of C (Chip), B (Block), and P (Page) may be used, in which C denotes a number c of a memory chip, B denotes a number b of a block, that is, a minimum erasing unit, and P denotes a number p of a page, that is, a minimum writing unit. The physical address is represented as CBP[c:b:p]. In the following description, one page has the same capacitance as one sector, that is, 512 bytes, for the purpose of facilitating the correspondence with the so-called FAT (File Allocation Table) file system or the like. As a method for identifying data to be recorded on the recording medium 303, two units of F (File) and S (Sector) may be used, in which F denotes a number f of files and S denotes a number s of sectors composing one file. The data is represented as FS [f:s].

In this example, each of the recording medium pieces C[0], C[1], C[2] and C[3] is composed of four blocks from B[0] to B[3], each of which is composed of four pages from P[0] to P[3].

The file managing means 300 is arranged to record and manage a name (File), a number, a size, a head address (Loc) or the like of each file recorded on the recording medium 303 from the recording medium M[0] to M[m-1] as well as manage a logical sequence of each file. Herein, m denotes a number of maximum files to be managed by the file managing means 300. In addition, a value described in the file managing means 300 in Fig.5 minus 1 indicates invalid file management data.

In the arrangement of Fig.5, hence, the sector data of each file is recorded regularly over four recording medium pieces in the sequence of 303b, 303c, and 303d from the recording medium piece 303a as a head. The file managing means 300 indicates the following information. Three files are recorded inside of the recording medium 303, in which the logical sequence of these files are F[1], F[2] and F[0]. The file F[1] is recorded on the capacitance of 23 sectors started from the head address CBP[0:1:0] of the block B[1]. The file F[2] is recorded on the capacitance of 13 sectors started from the head address CBP[0:3:0] of the block B[3]. The file F[0] is recorded on the capacitance of 12 sectors started from the head address CBP[0:0:0] of the block B[0].

Now, the description will be oriented to the rewrite of the file F[1] in Fig.5. At first, for doing the erasing operation, it is necessary to recognize an address of blocks composing the file F[1]. It is known that the recording medium 303 is composed of four recording medium pieces and each recording medium piece is composed of four blocks each of which is composed of four pages. It is recognized by the file managing means 300 that the file F[1] contains a capacitance of 23 sectors started from the head address CBP[0:1:0] of the block B[1]. That is, the file F[1] is made up of eight blocks over four recording medium pieces. Hence, the block erasing operation is executed for the blocks CB[0:1], CB[1:1], CB[2:1], CB[3:1], C3[0:2], CB[1:2], CB[2:2] and CB[3:2]. When the erasing operation of the file F[1] is ended up, the write of a new file is started. In this example, the sector data from FS[1:0] to FS[1:22] in the sequence of FS[1:0], FS[1:1], FS[1:2], FS[1:3], FS[1:4],... illustrated in Fig.5 are recorded over the recording medium pieces 303a, 303b, 303c and 303d.

The reading sequence of the sector data for the reading operation is executed in the same manner as that for the foregoing writing operation. For example, in the case of reading the file F[1], it may be recognized from the file managing means 300 that the file F[1] includes a capacitance of 23 sectors started from the head address CBP [0:1:0] of the block B[1]. The sector data from FS[1:0] to FS[1:22] in the sequence of FS[1:0], FS[1:1], FS[1:2], FS[1:3], FS[1:4]... illustrated in Fig.5 are vertically read out of four recording medium pieces.

If plural files are mingled within one block, it is necessary to save only the files required for the writing operation in another area. The use of the file recording system and the file managing system shown in Fig.5 allows one type of file to exist in the same block. Hence, the rewriting operation is made possible without having to do a complicated operation. If the recording medium is composed of plural recording medium pieces, all files are allowed to be managed merely by managing the files for the logically head recording medium piece.

As a recording medium used in the case of requesting the information recording and reproducing apparatus to be portable, by using a nonvolatile memory that does not need to back up the information with a cell, no recorded information is lost. This is favorable. This kind of nonvolatile memory may be the so-called EEPROM (Electrically Erasable and Programmable ROM) described in Iwata, et.al., "32-Mbits NAND flash memory" (Electronic Material Magazine, June, 1995, pp.32 to 37).

The means 300 for managing file recording states and files is executed to realize parallel control of the recording medium pieces and easy file management by following the condition that only one kind of file is recorded in one block and the condition that the regular control sequence is executed for plural recording medium pieces.

By the way, though the file F[1] of Fig.5 is recorded on eight blocks, it may be stored in the capacitance of 23 sectors, that is, six blocks. Likewise, the file F[0] is recorded over four blocks though it just needs the capacitance of 12 sectors stored in three blocks. This recording system has tendency to having empty blocks reduced though empty pages are left in the recording medium 303. Hence, it may be in some cases difficult to secure an empty area (empty block) for recording a new file.

At a time, it means that the blocks to be erased is made numerous when rewriting the file. Hence, it needs a longer erasing operation than the system in which the data is packed inside of the block. This is unfavorable for the system that is essential to fast rewriting operation. On the other hand, the recording system arranged to sequentially pack the sector data pieces of one file inside of a block has difficulty in parallel control of the recording medium pieces and speeding up the rewrite of the data.

Various respective aspects and features of the invention are defined in the appended claims.

Embodiments of the present invention can provide an information recording and reproducing apparatus provided with a recording medium composed of plural recording medium pieces which provides a capability of more efficiently and flexibly managing a memory without lowering a reading speed and a writing one.

In embodiments of the invention, the information recording and reproducing apparatus is arranged to manage the recording area of the recording medium composed of plural information-rewritable recording medium pieces as a one-dimensional sequence (block sequence) of blocks located regularly and circularly in the vertical direction and control the recording medium based on the file management information. When controlling the recording medium, the file is composed of a block sequence (file block sequence) of any length and is written in the recording medium from any head address together with the file management information stored therein.

According to other embodiments of the invention, the information recording and reproducing apparatus makes it possible to read from the recording medium a file composed of a block sequence of any length (file block sequence) recorded from any head address.

From the foregoing description, according to embodiments of the present invention, the method and the apparatus for recording and reproducing information, which are composed of plural recording medium pieces such as a flash memory, are arranged to consider the memory area as a one-dimensional block sequence regularly and vertically located over plural recording medium pieces and compose the file of a file block sequence of a block sequence of any length. Further, by enabling the write at any head address, the method and apparatus provide a capability of doing fast parallel control and efficiently using a memory through the use of simple file managing means.

The invention will now be described by way of example with reference to the accompanying drawings, throughout which like parts are referred to by like references, and in which:
Fig.1 is an outer appearance view of a conventional apparatus for recording and reproducing information;
Fig.2 is an outer appearance view of another conventional apparatus for recording and reproducing information;
Fig.3 is an outer appearance view of another conventional apparatus for recording and reproducing information;
Fig.4 is an outer appearance view of another conventional apparatus for feeding information;
Fig.5 is a view for describing a file recording example in the conventional apparatus for recording and reproducing information;
Fig.6 is a block diagram showing a schematic arrangement of the apparatus for recording and reproducing information according to the invention;
Fig.7 is a memory map for describing a recording method and a managing method of a file in the apparatus for recording and reproducing information according to the invention;
Fig.8 is a flowchart showing a first half of a writing operation of the file in the apparatus for recording and reproducing information according to the invention;
Fig.9 is a flowchart showing a second half of a writing operation of the file in the apparatus for recording and reproducing information according to the invention;
Fig.10 is a flowchart showing a first half of an erasing operation of a file in the apparatus for recording and reproducing information according to the invention;
Fig.11 is a flowchart showing a second half of an erasing operation of a file in the apparatus for recording and reproducing information according to the invention;
Fig.12 is a flowchart showing a first stage of a reading operation of a file in the apparatus for recording and reproducing information according to the invention;
Fig.13 is a flowchart showing a middle stage of a reading operation of a file in the apparatus for recording and reproducing information according to the invention; and
Fig.14 is a flowchart showing a last stage of a reading operation of a file in the apparatus for recording and reproducing information according to the invention.

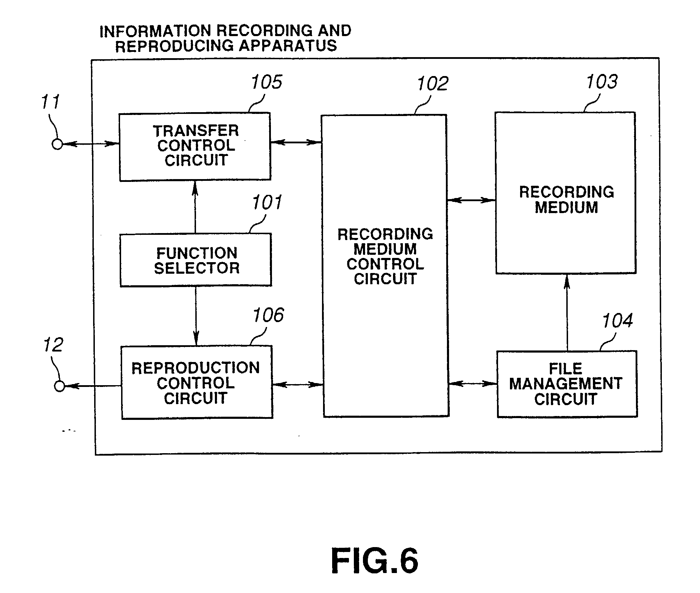

Fig.6 is a block diagram showing an overall arrangement of an apparatus for recording and reproducing information according to an embodiment of the invention.

A numeral 1 denotes an information recording and reproducing apparatus. This apparatus 1 includes a function selector 101, a recording medium 103, a file management circuit 104, a recording medium control circuit 102, a transfer control circuit 105, and a reproduction control circuit 106. The function selector 101 is inputted with a function desired and selected by a user, such as a recording or a reproduction. The recording medium 103 is composed of plural recording medium pieces. The file management circuit 104 operates to manage files recorded on the recording medium 103. The recording medium control circuit 102 operates to control operations of reading, writing and erasing a file relative to the recording medium 103 in concert with the file management circuit 104. The transfer control circuit 105 operates to control the input of data to the apparatus 1 or the output of data from the apparatus 1 through a terminal 11. The reproduction control circuit 106 operates to reproduce the file recorded on the recording medium and output it to the terminal 12.

Consider that the function selector 101 is set to write the file inputted and transferred from the terminal 11 onto the recording medium 103. At first, the recording medium control circuit 102 operates to exert the file management circuit 104 to retrieve an empty area inside of the recording medium 103. Then, the transfer control circuit 105 operates to execute a low-order transfer protocol (to be discussed below) so that it may read the input data. Then, the recording medium control circuit 102 operates to execute a high-order transfer protocol (to be discussed below) so that it may enter the input data on the recording medium 103 as a file. Then, the recording medium control circuit 102 operates to record file management information corresponding to the written file onto the file management circuit 104.

Herein, the low-order transfer protocol may be the ANSI X3.131-1986 standards called SCSI (Small Computer System Interface), the so-called IEEE 1394 standards, or the standards containing a physical layer such as PC card standards of PCMCIA (Personal Computer Memory Card International Association). By adopting such a standardized interface, the information recording and reproducing apparatus 1 may be more open-ended.

The recording medium control circuit 102 preferably provides a capability of controlling the recording medium 103 without impairing a data transfer performance held by the transfer control circuit 105. That is, the whole data transfer performance of the information recording and reproducing apparatus 1 depends on the lower one of the transfer control capability of the transfer control circuit 105 and the recording medium control capability of the recording medium control circuit 102. Hence, the information recording and reproducing apparatus 1 is inevitably required to have highly efficient transfer control circuit and recording medium control circuit. The present applicant has disclosed the technique of "Means for Transferring Information and Means for Recording Information" in the Japanese Laid-open No. Hei 7-200181 as this kind of system of writing a file in the high-order transfer protocol, employed in the recording medium control circuit 102. This technique makes it possible to write a file on the recording medium 103 at fast speed. That is, the recording medium control circuit 102 operates to write the data on plural recording medium pieces composing the recording medium 103 in parallel as will be discussed below.

In a case that the recording medium 103 composed of plural recording medium pieces is composed of a semiconductor memory such as the foregoing NAND type flash memory, a chip select signal is given to a memory chip where data is to be written. Then, a command is given to the recording medium 103 for indicating an input operation of serial data. Next, the operation is executed to enter an address where data is to be written and transfer and input the data of one page, that is, 512 bytes from the transfer control circuit 105 to an internal register of the memory chip. Last, the operation is executed to enter a command for doing a writing operation. As a result of those operations, a specific time later, the data of 512 bytes is written from the internal register to the memory cell, where the writing operation of one page is completed.

The recording medium control circuit 102 operates to sequentially enter the similar command address and data onto another recording medium piece before the specific time. On completion of writing all data composing one file, the file management circuit 104 operates to update the file management information.

The foregoing procedure has been expanded on the assumption that the data at the address where the new data is to be written is erased in advance. The procedure to be executed if the data at the address where the new data is to be written is not erased will be described later.

On the other hand, consider that the function selector 101 is set to read the file recorded on the recording medium 103 and transfer and output it onto the terminal 11. A user of the apparatus 1 specifies a file to be transferred and outputted to the terminal 11 by referring to the file management circuit 104. Then, the recording medium control circuit 102 exerts the file management circuit 104 to retrieve the management information about the file for recognizing a recording address and a capacitance. In succession, the recording medium control circuit 102 operates to execute a high-order transfer protocol for reading out a file specified, and the transfer control circuit 105 executes a low-order transfer protocol for outputting the file through the terminal 11.

Also in this case, the recording medium control circuit 102 preferably provides a capability of controlling the recording medium 103 without impairing a data transfer performance held by the transfer control circuit 105. Like the foregoing writing operation, the high-order transfer protocol is executed to read data in parallel.

At first, a chip select signal is given to a memory chip from which data is read. Then, a command for a reading operation is given to the memory chip. Next, by entering an address from which data is to be read, the operation is executed to read the data of one page, that is, 512 bytes from the address of the memory cell specified after a specific time to the internal register of the memory chip. Lastly, by transferring the data to the transfer control circuit 105, the operation of reading the data of one page is completed.

However, the recording medium control circuit 102 operates to execute the parallel input of the similar command and address to another recording medium piece before the specific time, for the purpose of enhancing a data reading speed.

On the other hand, consider that the function selector 101 is set to read the data recorded on the recording medium 103 and reproduce and output it to the terminal 12. At first, the user of this apparatus 1 refers to the file management circuit 104 for specifying a file to be reproduced and outputted. Then, the recording medium control circuit 102 exerts the file management circuit 104 to retrieve the management information about the file and recognize the recording address and the capacitance of the file. Next, like the foregoing transfer and output operation, the recording medium control circuit 102 operates to execute the high-order transfer protocol and read the data composing the specified file. In succession, the reproduction control circuit 106 executes the reproducing process about the data read by the recording medium control circuit 102 and then outputs the reproduced data from the terminal 12.

The reproducing process depends on the type of information recorded on the recording medium. If the file is coded, the corresponding decoding process is executed with respect to the data. For example, if the file of the recording medium 103 is encoded by the so-called MPEG algorithm, the reproduction control circuit 106 operates to decode the file according to the MPEG algorithm.

In order to realize a fast information transfer, it is better to use as the recording medium 103 of the information recording and reproducing apparatus 1 a disk medium such as a semiconductor memory medium, a magneto-optical disk, or a magnetic disk to be accessed at random. Further, the use of a nonvolatile memory results in eliminating the necessity of providing a power supply for holding information, thereby reducing the apparatus in size. For example, the memory may be a rewritable nonvolatile memory such as a flash memory.

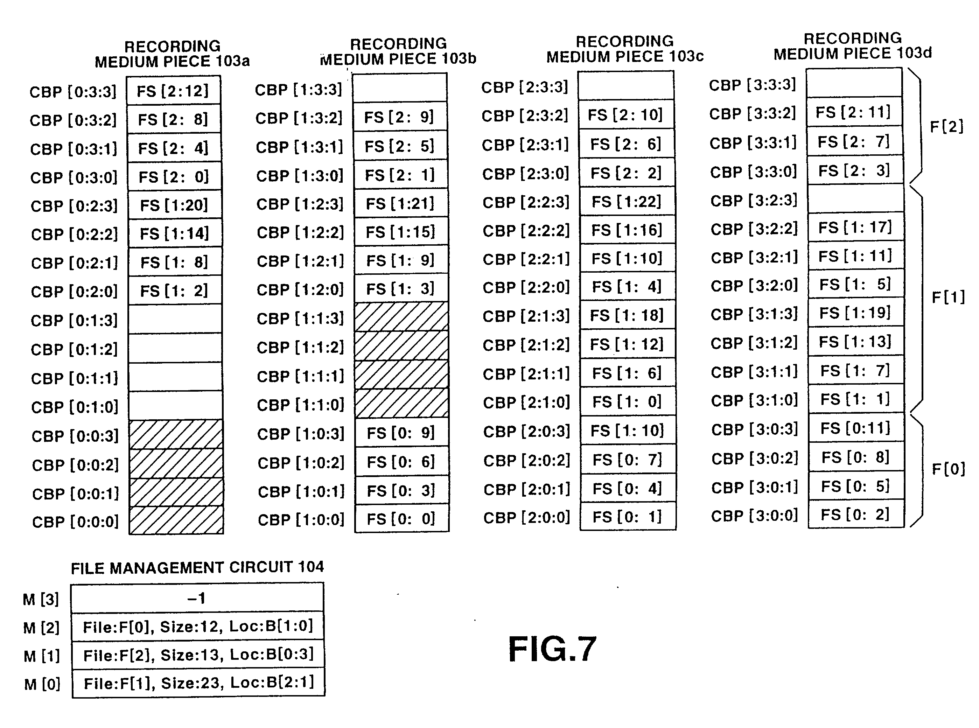

Fig.7 shows the file recording state and the file management circuit 104 according to the embodiment of the invention, for the purpose of solving the problems of the prior art shown in Fig.5. Like the prior art of Fig.5, each file is recorded regularly and vertically on plural recording medium pieces, while unlike the prior art of Fig.5, each file is not necessarily required to be vertically recorded on the sequential recording medium pieces. The file recorded on the four recording medium pieces 103a, 103b, 103c and 103d has the same recording content (sector data) as the file recorded as shown in Fig.5 though the recording locations of the file shown in Fig.7 are different from those of the file shown in Fig.5. The oblique portions of the recording medium pieces 103a and 103b indicate a block (invalid block) caused in manufacturing the recording medium piece or excessive rewriting or a block whose file is inhibited to be rewritten (system block) for the purpose of securing a system area or a spare area.

Hereafter, the recording format will be discussed in detail with reference to Fig.7. The recording medium 103 of this embodiment is composed of four recording medium pieces 103a, 103b, 103c and 103d. In the recording medium piece, one block is composed of four pages. The block refers to a data erasing unit and the page refers to a data writing unit as described above.

In order to display a physical address of the recording medium 103, three units of C (Chip), B (Block) and P (Page) are used, in which C denotes a number c of a memory chip, B denotes a number b of the block, that is, a minimum erasing unit, and P denotes a number p of the page, that is, a minimum writing unit. The physical address is represented as CBP[c:b:p]. The description will be expanded on that the capacitance for one page is 512 bytes that is the same as the capacitance of one sector, for the purpose of facilitating the correspondence with the so-called FAT (File Allocation Table) file system. In order to identify the data to be recorded on the recording medium, two units of F (File) and S (Sector) are used, in which F denotes a number f of the file and S denotes a number s of the sectors composing the file. The recorded data is represented as FS[f:s].

In this embodiment, each of the recording medium pieces C[0], C[1], C[2] and C[3] (that is, 103a, 103b, 103c, 103d) is composed of four blocks from B[0] to B[3]. Each block is composed of four pages from P[0] to P[3].

The file management circuit 104 operates to record the information of each file recorded on the recording medium 103 such as a name (File), a number, a size, and a location on M[0] to m[m-1] and manage the information as well as manage the logical sequence of each file, in which m denotes a maximum number of files to be managed by the file management circuit 104. The value described in the file management circuit 104 minus 1 indicates invalid file management data.

The file management information contained in this file management circuit 104 indicates the following. Three files are recorded on the recording medium 103. The logical sequence of these files are F[1], F[2], and F[0]. The file F[1] has a capacitance of 23 sectors. The file F[2] has a capacitance of 13 sectors. The file F[0] has a capacitance of 12 sectors. The file F[1] is recorded on the capacitance of 23 sectors started from the block CB[2:1] of the recording medium piece C[2] (103c) as the head address CBP[2:1:0]. The file F[2] is recorded on the capacitance of 13 sectors started from the b1ock·CB[0:3] of the recording medium piece C[0] (103a) as the head address address CBP[0:3:0]. The file F[0] is recorded on the capacitance of 12 sectors started from the block [1:0] of the recording medium piece C[1] (103b) as the head address CBP[1:0:0].

The number of blocks composing each file can be easily grasped from the fact that one block is composed of four pages and a capacitance value (page number) described in the file management circuit 104. For example, since the file management circuit 104 records the capacitance of the file F[0] as 12 pages, it is easily grasped that the file F[0] is composed of three blocks. Hence, it is grasped that the file F[0] is composed of a block sequence of CB[1:0], CB[2:0] and CB[3:0].

In Fig.5 which illustrates the foregoing prior art, the file F[0] is recorded vertically on four blocks, while in Fig.7 the file F[0] is recorded vertically on three blocks. Further, in Fig.5, if the block CB[0:0] is used as a system block, the blocks CB[1:0], CB[2:0], and CB[3:0] are unable to record and manage the file. On the other hand, in this embodiment, the use of the file management circuit 104 makes it possible to identify only the block CB[0:0] as the system block. Further, the circuit 104 operates to individually manage the file F[0] composed of the adjacent three blocks.

Likewise, it is grasped from the file management circuit 104 that since the file F[1] has a capacitance of 23 pages and a head block of CB[2:1], the file F[1] is recorded over six sequential blocks of CB[2:1], CB[3:1], CB[0:2], CB[1:2], CB[2:2] and CB[3:2].

That is, in the prior art shown in Fig.5, the file F[1] is recorded vertically on eight blocks, while it is recorded on six blocks. Further, in Fig.5, if the block CB[1:1] is an invalid block, the files recorded on the blocks CB[0:1], CB[2:1] and CB[3:1] are not allowed to be managed. However, by introducing the block management circuit 104 shown in Fig.7, it is possible to record and manage the files recorded on these blocks.

The most significant feature of the present invention is as follows. If the recording medium is composed of plural recording medium pieces, the recording area is regarded as a one-dimensional block sequence vertically and regularly located on the recording medium pieces and the file is composed of a file block sequence of any length. Further, by enabling the write at any head address, it is possible to efficiently implement the parallel control of writing and the retrieval of an empty area as well as to use the recording area through the effect of a simple file management circuit.

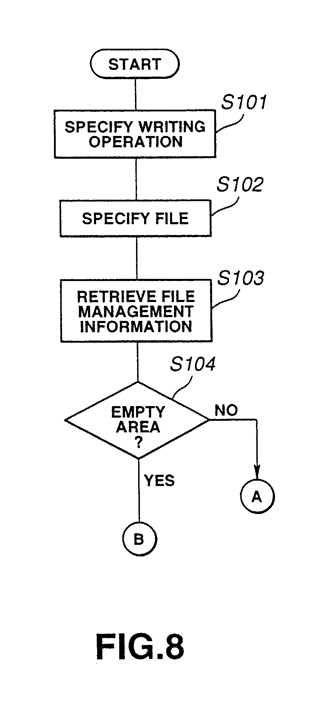

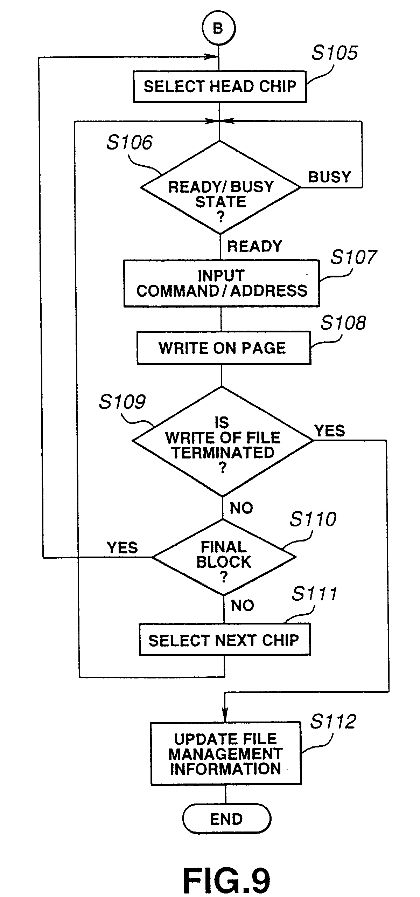

Figs.8 and 9 are flowcharts for illustrating the operation of the recording medium control circuit 102 if a transfer input operation for a file is specified by the function selector 101.

Later, the flowcharts will be described with reference to Figs.8 and 9. In this description, the block sequence composing a file to be controlled is called as follows. The block being controlled is referred to as a current block. The block adjacent to the current block and to be controlled next is referred to as a next block. The recording medium piece containing the current block is referred to as a current chip. The recording medium piece containing the next block is referred to as a next chip. The head block of the block sequence is referred to as a head block. The recording medium piece containing the head block is referred to as a head chip. The tail block of the block sequence is referred to as a last black. The recording medium piece containing the current block if the next block is contained in the head chip is referred to as a last chip.

At first, at a step S101, the recording medium control circuit 102 recognizes the operation of writing the data transmitted from the transfer control circuit 105 to the recording medium 103. At a next step S102, the user specifies the information about a file to be written, such as a file name and a capacitance through the information recording and reproducing apparatus 1.

In turn, at a step S103, the file management circuit 104 is executed to retrieve an empty area of the recording medium 103. Then, at the next step S104, If it is determined that there exists an empty area (Yes), the process of writing a file on the recording medium 103 is started from the next step. On the other hand, at the step S104, if it is determined that there exists no empty area (No), an operation of erasing a block (to be discussed below) is executed for securing an empty area. By referring to the file management circuit 104, it is possible to calculate out a total capacitance of the files recorded on the recording medium 103. Hence, it is possible to easily determine if there exists an empty area. Herein, the file to be erased for securing an empty area is made to be the logically oldest file. In place, the user of the apparatus 1 may select the file to be erased through the function selector 101.

Then, at a step S105, a chip select signal is inputted to the head chip for controlling the write. At the next step S106, a ready/busy state is checked as the status information of the current chip. Until the current chip reaches the ready state, the operation is waiting at this step. The recording medium piece selected for the first time since the operation of writing the file is started normally keeps the ready state. However, at the step S104, if the operation is branched into an erasing operation (No), it may not keep the ready state (Busy) because the medium piece is being erased.

At the step S106, if the recording medium piece is determined to be in the ready state (Ready), at the succeeding steps S107 and S108, the write of the sector data is executed along the foregoing writing procedure. The sector data written at the step S108 is written sequentially from the head address of the current block. Of course, as stated above, during the time of writing the data from the internal register of the memory chip to the memory cell, the operation may go to the next step without having to wait for the termination of the write.

At the next step S109, it is determined if the write for all the blocks composing a file is terminated. If it is terminated (Yes), at a step S112, the management information of the written file is updated and newly recorded in the file management circuit 104, and then the operation of inputting and transferring the file is terminated.

On the other hand, if it is determined that no write of the file is terminated (No), at the next step S110, it is determined if the current block is the last block. If at the step S110 it is determined that the current block is the last block (Yes), the operation returns to the step S105 at which the head chip is selected. Then, the foregoing process is repeated from the next page at the head block. On the other hand, if it is determined that it is not the last block (NO), at the next step S111, the next chip is selected. Then, from the step S106, the foregoing process is repeated.

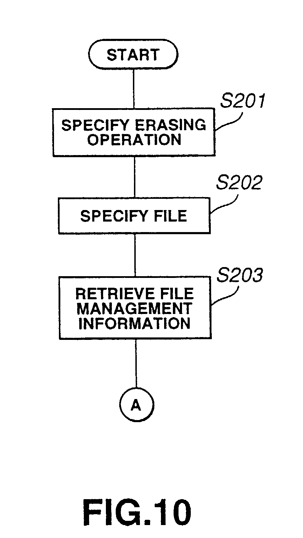

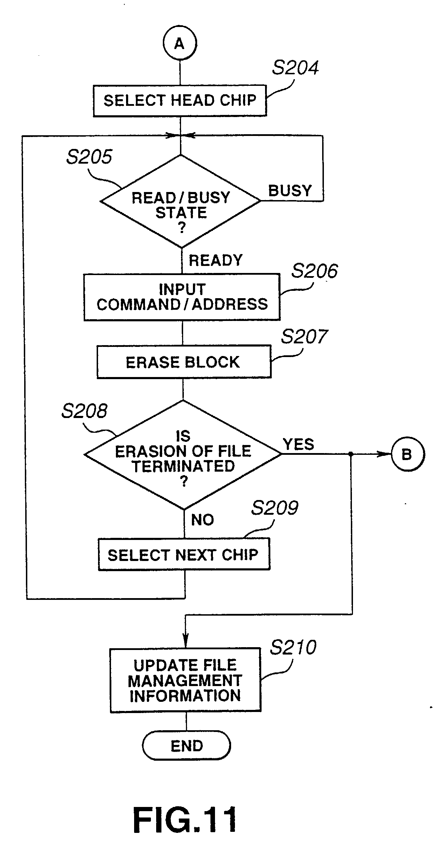

Figs.10 and 11 are flowcharts for illustrating the operation of the information recording and reproducing apparatus 1 if the operation of erasing the file is specified by the function selector 101.

At a step S201, the recording medium control circuit 102 operates to recognize execution.of an erasing operation for a file specified at the next step S202. At the next step S202, the user of the information recording reproducing apparatus 1 specifies information about a file to be erased, such as a file name. Then, at the next step S203, the file management circuit 104 is executed to retrieve the specified file.

At a step S204, a chip select signal is inputted to the head chip for erasing control. At the step S104 of the writing operation shown in Fig.8, if it is determined that no empty area is left (No), the operation is branched into the step S204. At the next step S205, it is checked if the current chip is a ready or a busy state. The operation is waiting until the current chip reaches the ready state. The recording medium Piece to be selected for the first time since the operation of erasing the file is started is normally kept ready.

At the step S205, if it is determined that the recording medium piece keeps the ready state, at the succeeding steps S206 to S207, the erasion of the block is executed. During this execution, the operation may go to the next step without having to wait for the termination of the erasion.

At the next step S208, it is determined if the erasion for all blocks composing the file is completed. If completed (Yes), at a step S210, the file management circuit 104 is executed to delete the management information about the erased file, and then the operation of erasing the file is terminated. During the writing operation described in Figs.8 and 9, if the operation is branched into the step S204, without doing the process at the step S210, the operation goes back to the step S105 contained in the writing operation shown in Fig.9. On the other hand, if it is determined that the write of the file is not terminated (No), at the next step S209, the next chip is selected, and the foregoing process is repeated from the step S205.

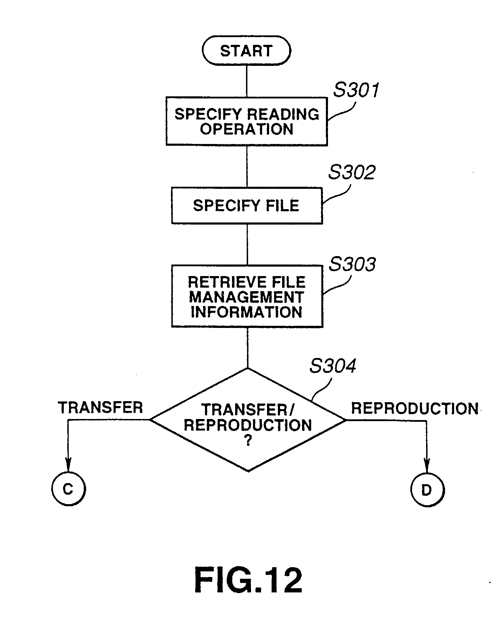

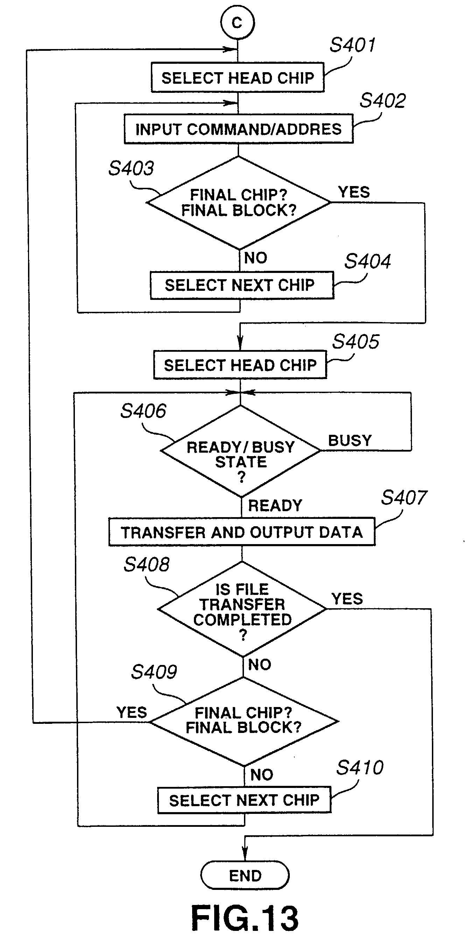

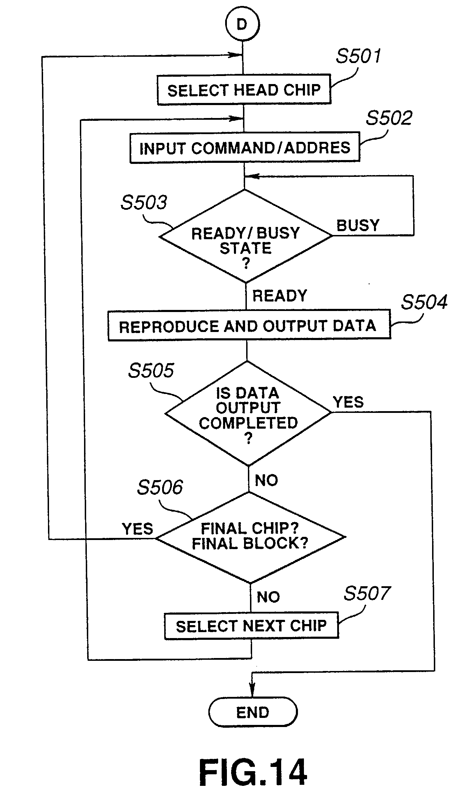

Figs.12 to 14 are flowcharts for illustrating the operation of the information recording and reproducing apparatus 1 if the function selector 101 is executed to specify the operation of reading the file. The operation of reading the file in the case of transferring it is different from that in the case of reproducing it.

At a step S301, the recording medium control circuit 102 operates to recognize execution of the operation of reading a file specified at the next step S302. At the next step S302, the user of the apparatus 1 specifies information about the file to be read for transferred output or reproduced output, such as a file name. Then, at the next step S303, the file management circuit 104 is executed to retrieve management information about the specified file, such as an address and a capacitance of the recording medium 301 and performs the process of reading the file at the next step S304 or later based on the management information.

At the next step S304, if the function selector 101 is specified for the transferred output, the operation is branched into a step S401 (to be discussed below). On the other hand, if the function selector 101 is specified for the reproduced output, the operation is branched into a step S501 (to be discussed below).

As for the reading operation for the transferred output, the operation shifts from the step S304 to the step S401, at which a chip select signal is inputted to the head chip for reading control. At the next step S402, a command for indicating the read of a page and an address where the page is to be read are sequentially inputted to the current chip.

At the next step S403, it is determined if the current block is the last block of the block sequence and the current chip is the last chip. If neither is yes (No), from the next step S404, the command and the address for the next chip are repetitively inputted. On the other hand, if at the step S403 it is determined that the current block is the final block or the current block is the final chip (Yes), from the step S405, the operation of reading the sector data is started.

That is, by repeating the process from the steps S402 to S404, the sector data read out of the memory cell is held in the internal register of each selected recording medium piece a specific time later. Hence, after the next step S405, all sector data are allowed to be sequentially read out of the internal registers. This method makes an effective use of the time of reading the sector data from the memory cell to the internal register in each recording medium piece, thereby reducing the overhead in the reading operation.

Then, at the step S405, the head chip selected for the first time at the step S401 is selected again. At the next step S406, it is checked if the selected recording medium piece is in the ready or busy state. At a step S407, the operation is waiting at this step while the recording medium piece is in the busy state. On the other hand, if it is determined that the recording medium piece is in the ready state, at the next step S407, the operation is executed for reading the sector data held in the internal register of the recording medium piece and then transmitting it to the transfer control circuit 105.

At the next step S408, it is determined if the operation of reading all sector data composing the file is terminated. If terminated (Yes), the foregoing transfer operation is terminated. On the other hand, if it is determined that the operation is not terminated (No), at the next step S409, it is determined if the current chip is the last chip and the current block is the last block. If neither is yes (No), at the next step S410, the next chip is selected, and the foregoing operation of reading the sector data is repeated from the step S406. At a step S409, if it is determined that the block corresponds to the final block or the chip corresponds to the final chip (Yes), the similar process is repeated since the step S401.

On the other hand, if the function selector is specified for the reproduced output, that is, the reading operation is for the reproduced output, the operation shifts from the step S304 to the step S501 at which a chip select signal is inputted to the head chip for reading. At the next step S502, a command for indicating page reading and an address where the page is to be read are sequentially inputted to the current chip.

At the next step S502, it is checked if the current chip is in the ready or busy state. The operation is waiting at this step if the recording medium piece is busy. On the other hand, if it is determined that the recording medium piece is in the ready state, at the next step S504, the operation is executed for reading the sector data held in the internal register of the recording medium piece and transmitting it to the reproduction control circuit 106.

At the next step S505, it is determined if the operation of reading all sector data composing a file is terminated. If terminated (Yes), the foregoing operation for the reproduced output is terminated. On the other hand, if not terminated (No), at the next step S506, it is determined if the current chip is the last chip and the current block is the last block. If neither is yes, at the next step S507, the next chip is selected. Then, the read of the sector data is repeated from the step S502. At the step S506, if it is determined that the current block is the final chip or corresponds to the final chip (Yes), at the step S501, the similar process is repeated.

In comparing the process for the reproduced output with the process for the transferred output from the steps S401 to S410 for individually executing the input of the command and the address and the output of the data, since the process from the steps S501 to S506 is executed for each recording medium piece, the operation for the reproduced output prolongs the total reading time. However, since a plurality of recording medium pieces are not operated concurrently, if a voice is reproduced in real time, for example, this operation is very convenient, because the power consumption is allowed to be suppressed.

In addition, the file treated in this embodiment may be composed of various kinds of information such as voice information, music information, text information, and picture information.

## Claims

1. A method for recording information, comprising the steps of:
managing a file, for managing a storage area of a recording medium composed of plural information-rewritable recording medium pieces as a block sequence composed of blocks one-dimensionally located regularly and circularly on said plural recording medium pieces in the vertical direction;
controlling said recording medium based on file management information used at said file management step; and
wherein at said control step said file is composed of a file block sequence of any length and is written from any head address on said recording medium and at said file management step the corresponding file management information to the write of said file is saved.

2. The information recording method according to claim 1, wherein at said file management step, the head address of said file block sequence on said recording medium is saved as one piece of said file management information.

3. The information recording method according to claim 1, wherein said block unit is composed of plural writing units, and at said control step said file is written on said recording medium as a one-dimensional sequence of said writing units regularly and circularly located on said file block sequence in the vertical direction.

4. The information recording method according to claim 1, wherein said block unit is an erasing unit of said recording medium piece.

5. The information recording method according to claim 1, wherein said recording medium is a semiconductor memory.

6. The information recording method according to claim 5, wherein said recording medium is a nonvolatile memory.

7. The information recording method according to claim 1, wherein said recording medium is a disk medium such as a magneto-optical disk or a magnetic disk.

8. An apparatus for recording information, comprising:
a recording medium composed of plural information-rewritable recording medium pieces;
means for managing a file, for managing a storage area of said recording medium as a block sequence composed of a one-dimensional sequence of blocks regularly and circularly located on said plural recording medium pieces in the vertical direction;
means for controlling said recording medium based on file management information of said means for managing a file; and
wherein said means for controlling said recording medium operates to write a file block sequence composed of a block sequence of any length from any head address on said recording medium and the corresponding file management information to the write of said file is recorded in said file management means.

9. The information recording apparatus according to claim 8, wherein said means for managing the file operates to record a head address of said file block sequence of said recording medium as one piece of said file management information.

10. The information recording apparatus according to claim 8, wherein said block unit is composed of plural writing units, and said means for controlling said recording medium operates to write on said recording medium said file as a one-dimensional sequence of said writing units regularly and circularly located on said file block sequence in the vertical direction.

11. The information recording apparatus according to claim 8, wherein said block unit is an erasing unit of said recording medium piece.

12. The information recording apparatus according to claim 8, wherein said recording medium is a semiconductor memory.

13. The information recording apparatus according to claim 12, wherein said recording medium is a nonvolatile memory.

14. The information recording apparatus according to claim 8, wherein said recording medium is a disk medium such as a magneto-optical disk or a magnetic disk.

15. A method for reproducing information, comprising the steps of:
managing a file, for managing a storage area of a recording medium composed of plural information-recorded recording medium pieces as a block sequence composed of a one-dimensional sequence of blocks regularly and circularly located on said recording medium pieces in the vertical direction;
controlling said recording medium based on file management information used at said file management step; and
wherein at said step of controlling said recording medium, the file composed of a file block sequence of any length and recorded at any head address on said recording medium is read out based on said file management information used at said file management step.

16. The information reproducing method according to claim 15, wherein at said file management step, the head address of said file block sequence on said recording medium is saved as one piece of said file management information.

17. The information reproducing method according to claim 15, wherein said block unit is composed of plural reading units, and at said step of controlling said recording medium, said file is read out of said recording medium as a one-dimensional sequence of said reading units regularly and circularly located on said file block sequence in the vertical direction.

18. The information reproducing method according to claim 15, wherein said block unit is an erasing unit of said recording medium piece.

19. The information reproducing method according to claim 15, wherein said recording medium is a semiconductor memory.

20. The information reproducing method according to claim 19, wherein said recording medium is a nonvolatile memory.

21. The information reproducing method according to claim 15, wherein said recording medium is a disk medium such as a magneto-optical disk or a magnetic disk.

22. An apparatus for reproducing information, comprising:
a recording medium composed of plural information-recorded recording medium pieces;
means for managing a file, for managing a recording area of said recording medium as a block sequence composed of a one-dimensional sequence of blocks regularly and circularly located on said plural recording pieces in the vertical direction;
means for controlling said recording medium, based on file management information used in said file managing means; and
wherein said means for controlling said recording medium operates to read the file composed of a file block sequence of any length and recorded on said recording medium at any head address, based on the file management information used in said file managing means.

23. The information reproducing apparatus according to claim 22, wherein said means for managing the file operates to record the head address of said file block sequence of said recording medium as one piece of said file management information.

24. The information reproducing apparatus according to claim 22, wherein said block unit is composed of plural reading units, and said means for controlling said recording medium operates to read from said recording medium said file as a one-dimensional sequence of said reading units regularly and circularly located on said file block sequence in the vertical direction.

25. The information reproducing apparatus according to claim 22, wherein said block unit is composed of an erasing unit of said recording medium piece.

26. The information reproducing apparatus according to claim 22, wherein said recording medium is a semiconductor memory.

27. The information reproducing apparatus according to claim 26, wherein said recording medium is a nonvolatile memory.

28. The information reproducing apparatus according to claim 22, wherein said recording medium is a disk medium such as a magneto-optical disk or a magnetic disk.
